Europäisches Patentamt

European Patent Office

Office européen des brevets

(19)

(11) Veröffentlichungsnummer: **0 400 488**
**A2**

(12) **EUROPÄISCHE PATENTANMELDUNG**

(21) Anmeldenummer: **90109918.4**

(51) Int. Cl.⁵: **G01N 27/404**

(22) Anmeldetag: **24.05.90**

---

(30) Priorität: **27.05.89 DE 3917334**

(43) Veröffentlichungstag der Anmeldung:
**05.12.90 Patentblatt 90/49**

(84) Benannte Vertragsstaaten:
**AT BE CH DE DK ES FR GB GR IT LI LU NL SE**

(71) Anmelder: **BERNT GMBH**
**Grunerstrasse 133**
**D-4000 Düsseldorf 1(DE)**

(72) Erfinder: **Soedingrekso, Abi, Dipl.-Ing.**
**Humboldtstrasse 18**
**D-5600 Wuppertal 2(DE)**

(74) Vertreter: **Sparing Röhl Henseler**
**Patentanwälte European Patent Attorneys**
**Rethelstrasse 123**
**D-4000 Düsseldorf 1(DE)**

---

(54) **Gasmesszelle.**

(57) Gasmeßzelle mit sauerstoffdotierten Edelmetallelektroden.

EP 0 400 488 A2

## Gasmeßzelle

Die Erfindung betrifft eine Gasmeßzelle, bestehend aus zwei in einen Elektrolyten eingetauchten Elektroden aus Edelmetall und einer flüssigkeitsdichten, jedoch gasdurchlässigen, vorzugsweise hydrophoben Membran, die den Elektrolyten von dem gasführenden Raum trennt. Solche Meßzellen sind auch unter der Bezeichnung "Clark-Zelle" bekannt.

Je nach verwendeten Elektrolyten, Elektroden und Membranen spricht die Meßzelle gasspezifisch an; dabei ist das Elektrodenmaterial so zu wählen, daß es sich in dem jeweils benötigten Elektrolyten nicht zersetzt.

Es wurde nun überraschend festgestellt, daß eine Dotierung der Elektroden mit Sauerstoff im Bereich ihrer in den Elektrolyten eingetauchten Oberfläche zu einer Meßzelle führt, deren Ansprechempfindlichkeit im ppm- bzw. ppb-Bereich um mindestens eine Größenordnung höher liegt als die einer gleichartigen Zelle mit unbehandelten Elektroden. Dies gilt besonders dann, wenn beide Elektroden behandelt sind, und zeigt sich besonders ausgeprägt bei Elektroden aus Silber.

Für den Dotierungsvorgang kann man die in der Halbleiterherstellung gebräuchlichen Techniken anwenden, etwa Diffusion oder Implantation, aber auch auf chemischem Wege läßt sich die Dotierung durchführen.

Die beschriebene Verbesserung wurde zumindest bei Zellen für die nachstehend genannten Gase unter Verwendung einer feinporigen, hydrophoben Membran festgestellt: $Cl_2$, $HCl$, $PH_3$, $AsH_3$, $B_2H_6$, $SiH_2Cl_2$, $SiH_4$. Dabei trat der zusätzliche Vorteil auf, daß die Zelle keine Querempfindlichkeit gegenüber Wasserstoffkonzentrationen und Lösungsmitteln aufweist.

## Ansprüche .

1. Gasmeßzelle, bestehend aus zwei in einen Elektrolyten eingetauchten Elektroden aus Edelmetall und einer flüssigkeitsdichten, vorzugsweise hydrophoben, gasdurchlässigen Membran, die den Elektrolyten von dem gasführenden Raum trennt, wobei mindestens eine der Elektroden im Bereich ihrer eingetauchten Oberfläche mit Sauerstoff dotiert ist.

2. Gasmeßzelle nach Anspruch 1, bei der beide Elektroden mit Sauerstoff dotiert sind.

3. Gasmeßzelle nach Anspruch 1 oder 2, bei der mindestens eine der Elektroden aus Silber mit einem Feingehalt von mindestens 800/1000 besteht.

4. Verwendung der Gasmeßzelle nach einem der vorangehenden Ansprüche für die Bestimmung toxischer Gase und Hydride einschließlich $Cl_2$, $HCl$, $PH_3$, $AsH_3$, $B_2H_6$, $SiH_2Cl_2$, $SiH_4$.

5. Verwendung der Gasmeßzelle nach Anspruch 4 im ppm-/ppb-Bereich.

6. Verwendung der Gasmeßzelle nach Anspruch 4 oder 5 in Fallen, bei denen fehlende Querempfindlichkeit gegenüber $H_2$-Konzentrationen und Lösungsmitteln von Bedeutung sind.